# FASCICULE DE BREVET EUROPEEN

(11) **EP 0 637 560 B1**
(45) Date de publication et mention de la délivrance du brevet: **16.07.1997**
(21) Numéro de dépôt: 94870105.7
(22) Date de dépôt: 24.06.1994
(51) Int. Cl.: B65G 45/12

(54) **Dispositif de raclage du brin de retour d'une bande transporteuse**
Abstreifvorrichtung für den Rücklaufbereich von einem Förderband
Scraper device for the return run of a conveyor belt

(30) Priorité: 03.08.1993 BE 9300809
(43) Date de publication de la demande: 08.02.1995
(73) Titulaire: TECHNIC GUM, 7460 Soignies (BE); Davidts, Emmanuel, B-7191 Ecaussines (BE); Wartelle, André, F-59840 Premesques (FR)
(72) Inventeur: Davidts, Emmanuel, B-7191 Ecaussines (BE); Wartelle, André, F-59840 Premesques (FR)
(74) Mandataire: Pieraerts, Jacques

(56) Documents cités:
- FR-A- 2 372 755
- GB-A- 2 227 992
- US-A- 4 696 388

## Description

L'invention concerne un dispositif de raclage du brin de retour d'une bande transporteuse selon le préambule de la revendication 1. Un tel dispositif est décrit par exemple dans GB-A-2 227 992.

Les produits de toutes natures tels que charbons, minerais, graviers et divers produits pulvérulents ou poudreux véhiculés par des bandes transporteuses ont tendance à se mettre de façon naturelle en talus. Le poids d'un talus formé dans ces circonstances a pour conséquence immédiate que les matières plus fortement incrustées dans la zone centrale de la bande transporteuse provoquent une usure plus prononcée de lame racleuse dans sa partie centrale. Il est clair également qu'une plus grande concentration de matières dans cette zone centrale provoque également une plus grande usure de la lame racleuse dans sa partie centrale.

Pour remédier à cette situation il a déjà été proposé d'utiliser comme moyen de raclage des lames segmentées dites "avec rattrapage d'usure".

Il a aussi été proposé de faire usage d'une lame courbe qui s'étend dans un plan se rapprochant sensiblement d'un plan parallèle à celui dans lequel s'étend le brin de retour qui doit être désincrusté et monté à basculement sur des pivots horizontaux.

Il est évident que de tels racleurs sont montés derrière le tambour de tête, dans la zone où le brin de retour se forme.

Les racleurs connus à ce jour et apparentés aux types décrits ci-dessus offrent l'inconvénient de présenter un encombrement important, d'être d'un entretien fastidieux dû notamment à la nécessité d'un réglage continu. Leur inefficacité résulte également de leur complexité et la difficulté de provoquer leur adaptation automatique en fonction de leur usure.

L'invention a pour but de remédier à ces divers inconvénients et de réaliser un dispositif de raclage d'un type nouveau et original qui assure précisément une adaptation automatique aux conditions de travail nées de la plus grande sollicitation de la partie centrale de la lame racleuse ou les éléments constituant cette lame racleuse.

Pour réaliser cet objectif conformément à l'invention, le dispositif comprend une lame racleuse en forme bloc allongé, en matière élastique, contre lequel prend appui un profilé de support exerçant une pression en direction du brin de retour, caractérisé en ce que le bloc de forme allongée présentent une zone centrale par laquelle elle est en contact avec le profilé de support et, de part et d'autre de cette zone centrale, une zone dans laquelle elle s'écarte progressivement du profilé de support.

Dans une forme de réalisation envisageable la lame de forme allongée présente un côté sensiblement convexe qui est en contact avec le profilé de support précité.

Un détail de l'invention réside dans le fait qu'au moins un raidisseur est noyé dans la masse dont est constitué la lame de forme allongée en matière élastique.

Selon une forme d'exécution adoptée de préférence des inserts de raclage sont solidarisés de la lame en matière élastique et ils présentent sensiblement la forme de trapèzes, dont la grande base est dirigée, en considérant leur position d'utilisation, vers le brin de retour de la bande transporteuse.

D'autres détails et avantages de l'invention ressortiront de la description qui sera donnée ci-après d'un dispositif de raclage du brin de retour d'une bande transporteuse selon l'invention.

Cette description n'est donnée qu'à titre d'exemple et ne limite pas l'invention. Les notations de référence se rapportent aux figures ci-jointes.

La figure 1 illustre schématiquement la disposition en talus des matières véhiculées sur une bande transporteuse formant gouttière.

La figure 2 illustre également schématiquement la disposition selon l'état de la technique des lames segmentées dites à rattrapage d'usure.

La figure 3 illustre un montage appartenant à l'art antérieur.

La figure 4 est une vue de face d'une lame formée d'un bloc de matière élastique allongé destinée à recevoir les inserts résistant à l'abrasion et de son support métallique.

La figure 5 est une vue latérale de la lame et de son support métallique selon la figure 4.

La figure 6 est une vue en perspective et avec brisures de la lame selon l'invention, et de son support métallique.

La figure 7 est une vue en perspective montrant le montage de la lame dans ses supports amortisseurs.

La figure 8 montre la position d'une lame selon l'invention équipée d'inserts de raclage, dans sa forme en repos.

La figure 9 montre, dans une représentation fortement exagérée, la position courbée d'une lame selon l'invention, munie d'inserts de raclage trapezoïdaux.

La figure 10 montre, dans une représentation fortement exagérée, la position courbée d'une lame selon l'invention, munie d'inserts de raclage dont une partie seulement est de forme trapezoïdale.

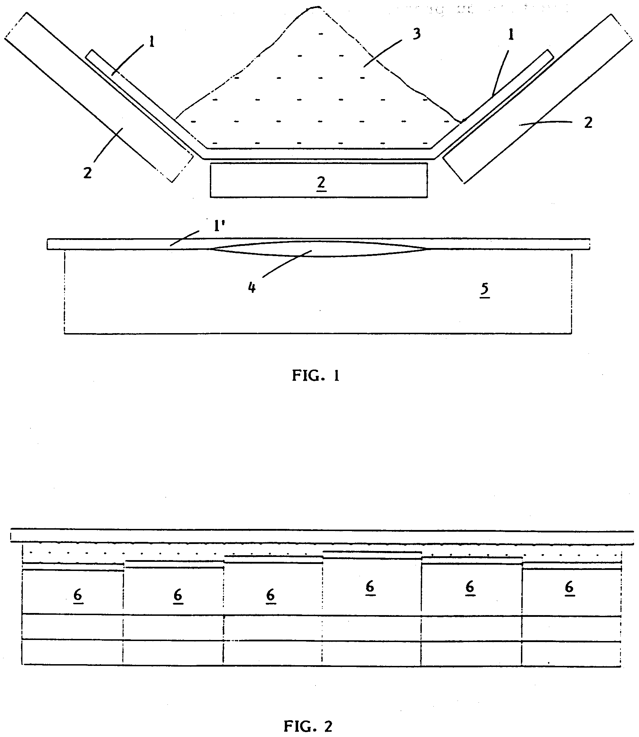

La figure 1 illustre donc bien le problème auquel l'invention remédie en partant de la constatation que le degré d'usure des lames dans un dispositif de raclage n'est pas le même sur toute la largeur du dispositif. Dans cette figure on remarque l'angle formée par la brande transporteuse 1 qui se déplace sur des rouleaux centraux 2 et latéraux 2'. Les matériaux véhiculés sur la bande transporteuse 1 forment un talus naturel 3. Une lame racleuse travaillant le brin de retour 1' rencontre dans la partie centrale du brin de retour 1' une masse de matière à détacher 4 dont l'importance a été exagérée à la figure. Il en va de même de l'usure que présente dans sa partie centrale le centre du brin de retour 1' de la bande transporteuse.

La figure 2 illustre un dispositif de raclage considéré comme appartenant à l'état antérieur. Dans ce dispositif les lames du dispositif de raclage sont segmentées et sont destinées à rattraper l'usure de ces produits, de la manière irrégulière, qui vient d'être décrite. Les lames de raclage du dispositif selon la figure 2 sont désignées par la référence 6. Elles sont montées sur un support qui ne sera pas décrit plus en détail.

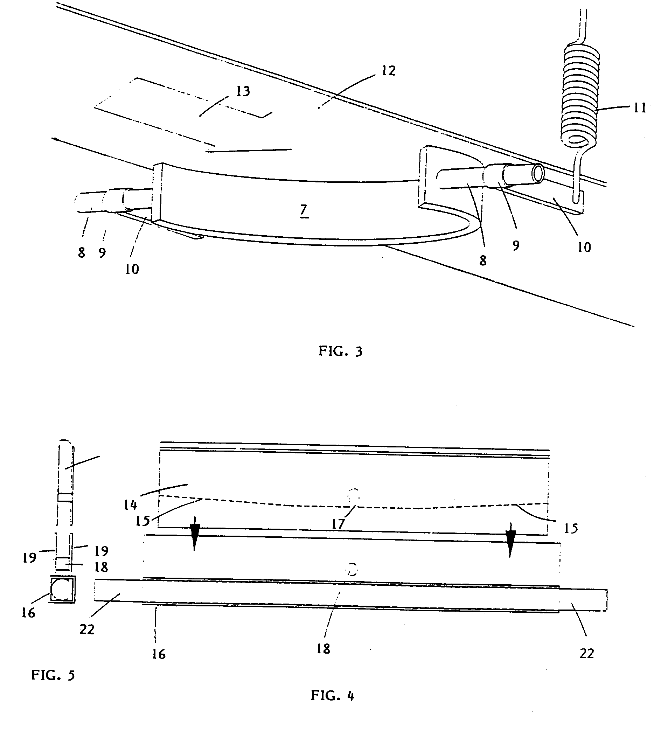

Un autre moyen de résoudre en partie le problème qui vient d'être décrit est représenté par la figure 3 où il est fait usage d'une lame courbe 7 qui porte des tourillons 8 montés à rotation dans des bagues 9. Aux tourillons 8 sont soudés des bras de levier 10 soumis à l'action de ressorts de traction et de torsion 11. En considérant que le sens de déplacement du brin de retour de la bande transporteuse 12 est indiqué par la flèche 13, l'usure de la partie centrale de la lame racleuse 7 est sensée être compensée par le basculement de cette lame courbe 7 autour de l'axe géométrique des tourillons 8.

Ces structures offrent cependant l'inconvénient de devoir disposer d'un emplacement important compte tenu de l'encombrement.

Le dispositif de raclage qui fait l'objet de la présente demande de brevet est illustré par les figures 4 à 10.

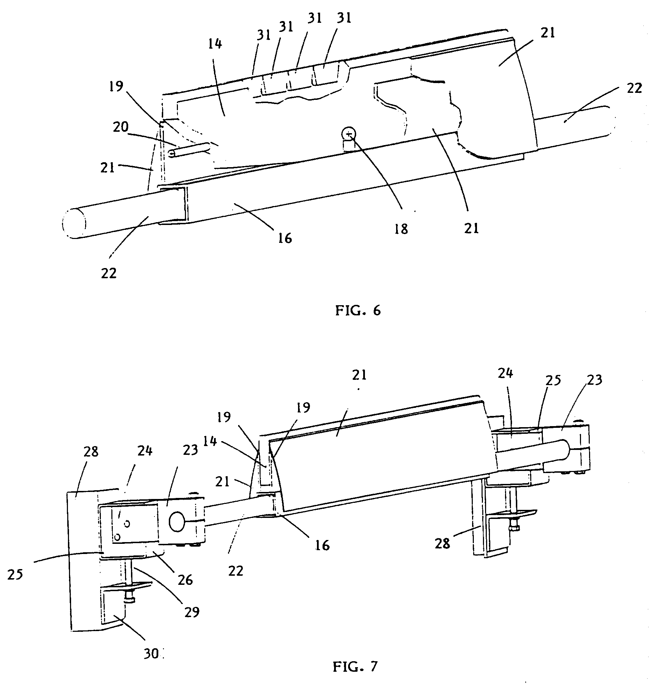

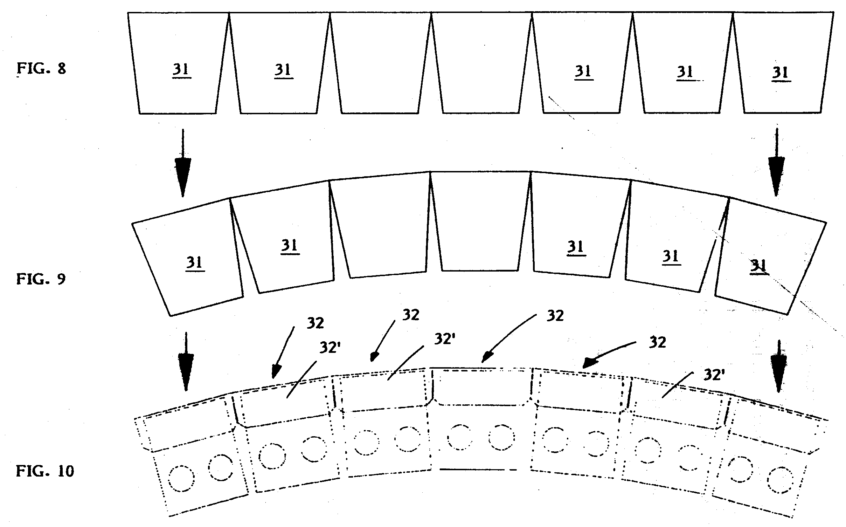

La figure 4 est une des figures qui illustrent clairement le principe qui est à la base de l'invention et qui consiste à concevoir une lame racleuse 14 en une matière élastique telle qu'un élastomère qui se caractérise par le fait que le bord inférieur 15 de cette lame racleuse soit est convexe, soit présente au moins trois sections dont seule la section centrale est rectiligne ou sensiblement rectiligne et vient prendre appui sur un profilé de support 16 qui est parfaitement visible dans les figures 4, 6 et 7. La lame racleuse 14 peut être équipée d'inserts de raclage résistant à l'abrasion. La forme de ces inserts de raclage visibles dans la figure 6 ainsi que dans les figures 8, 9 et 10 sera décrite plus loin.

Dans la figure 4 on remarque clairement que la partie centrale du bord inférieur 15 de la lame racleuse est rectiligne tandis que les parties adjacentes latérales de la section centrale se relèvent selon un angle qui peut être variable en fonction de la qualité de l'élastomère.

Le bord inférieur 15 de la lame racleuse 14 peut également être convexe.

Au centre de la lame racleuse 14 est ménagée une découpe 17 qui s'adapte, en position d'utilisation de la lame de raclage, sur un petit axe de centrage 18 qui est monté entre deux plaques 19 soudées sur le profilé de support 16. Ce petit axe, devant recevoir la lame par principe de clipsage, a pour objet d'éviter un déplacement horizontal et vertical de cette dernière et permettre après usure, un remplacement aisé de la lame de raclage, sans faire appel ni à des vis, ni à des écrous.

La lame de raclage 14 constituée d'un élastomère est renforcée par au moins un élément raidisseur 20. Cet élément raidisseur 20 peut être constitué de fibre de verre ou de fibre de carbone. Plusieurs éléments raidisseurs peuvent être noyés dans la masse de l'élastomère dont est constituée la lame racleuse.

A la partie supérieure de la lame racleuse est fixée de part et d'autre une bavette 21 qui assure une évacuation complète des poussières provoquées par le travail de raclage, de telle sorte que celles-ci ne viennent en aucune manière s'accumuler sur le profilé de support ou tout autre organe ou élément en faisant partie. La matière dont sont constituées les bavettes 21 est suffisamment souple pour s'adapter à la courbure de la lame racleuse et elle est également suffisamment rigide pour être amenée à vibrer lors du travail de raclage, ce qui facilite encore l'évacuation des poussières déposées sur ces bavettes.

Le profilé de support 16 est prolongé par deux tourillons 22. Ces tourillons sont saisis par des mâchoires 23 fixées à l'extrémité de deux plaques 24 qui emprisonnent des blocs amortisseurs 25 qui sont eux-mêmes emprisonnés dans des profilés 26 qui peuvent être déplacés en hauteur le long de consoles 28. Le réglage en hauteur se fait de toute manière approprié en faisant par exemple usage d'une tige de réglage 29 qui traverse une équerre 30 fixée à la console 28, une partie du profilé peut glisser dans une fente ménagée dans une des faces de la console 28 et qui n'est pas visible aux figures.

La fonction du bloc amortisseur réglable, visible à la figure 7 et comprenant les éléments répertoriés 23 à 30, a pour objet d'exercer une pression contrôlée et suffisante pour permettre la courbure nécessaire au rattrapage de la perte d'abrasion et permettre ainsi de maintenir un contact souple et permanent entre la lame et le brin de la bande à racler. Il a également pour fonction d'assurer cette pression constante, pendant toute la durée de vie de la lame, ce qui évite toute intervention humaine. Le bloc amortisseur est basé sur un principe de torsion et de compression, permettant une déflexion de plusieurs centimètres compensant le rattrapage de l'usure.

La lame racleuse 14, constituée d'un élastomère, pourrait, dans certaines circonstances, effectuer son travail de raclage sans être pourvue d'inserts de raclage 31 qui sont bien visibles aux figures 6 ainsi que 8, 9 et 10.

Ces inserts de raclage 31 en une matière résistant bien à l'abrasion telle que de l'acier ou un carbure métallique présentent une forme qui doit s'adapter à la courbure de la lame lorsque celle-ci doit présenter une certaine courbure due à l'usure plus prononcée de la partie centrale de la lame de raclage et, en général, de ces inserts de raclage 31.

Les inserts 31 sont de forme trapézoïdale et leur grande base est dirigée du côté de la lame qui est destiné à effectuer le travail de raclage. Ces mêmes inserts de raclage 31 sont représentés en position de repos à la figure 8, tandis que la figure 9 représente, comme il a déjà été dit précédemment, sous une forme fortement exagérée, la courbure que peut prendre la lame de raclage et ses inserts.

Dans une variante, les inserts de raclage peuvent prendre la forme d'inserts 32. Ils sont alors constitués d'une partie sensiblement rectangulaire dans laquelle cependant les bords latéraux de ces parties rectangulaires 32', qui viennent en contact les uns avec les autres, sont légèrement inclinés pour permettre à la lame de raclage de prendre une forme légèrement arrondie comme le représente la figure 9, dont il a été dit que la courbure selon cette figure était exagérée.

Le dispositif de raclage selon la présente demande compense automatiquement les pertes d'abrasion qui se produisent dans la partie centrale d'une lame de raclage conventionnelle. A mesure que les inserts de raclage de la lame racleuse 14 présentent des signes d'usure plus prononcés dans la partie centrale de la lame de raclage, une correction automatique se produit du fait que la lame de raclage prend appui sur un profilé de support 16.

## Revendications

1. Dispositif de raclage du brin de retour (1') d'une bande transporteuse, comprenant une lame racleuse en forme de bloc allongé (14), en matière élastique, contre lequel prend appui un profilé de support (16) exerçant une pression en direction du brin de retour (1'), caractérisé en ce que le bloc de forme allongée (14) présentent une zone centrale par laquelle il est en contact avec le profilé de support (16) et, de part et d'autre de cette zone centrale, une zone dans laquelle le bord du bloc de forme allongée (14) s'écarte progressivement du profilé de support (16).

2. Dispositif selon la revendication 1, caractérisé en ce que le bloc de forme allongée (14) présente un côté sensiblement convexe qui est en contact avec le profilé de support précité (16) dans sa zone centrale.

3. Dispositif selon l'une des revendications 1 - 2, caractérisé en ce qu'au moins un raidisseur (20) est noyé dans la masse dont est constitué le bloc de forme allongée (14) en matière élastique.

4. Dispositif selon la revendication 3, caractérisé en ce que l'élément raidisseur précité (20) est constitué d'acier, tel que l'acier ressort.

5. Dispositif selon la revendication 3, caractérisé en ce que l'élément raidisseur précité (20) est constitué de fibres de verre.

6. Dispositif selon la revendication 3, caractérisé en ce que l'élément raidisseur précité (20) est constitué de fibres de carbone.

7. Dispositif selon l'une des revendications 1 - 6, caractérisé en ce que le profilé de support précité (16) supporte deux plaques (19) entre lesquelles le bloc de forme allongée (14) en matière élastique peut être positionné, les extrémités du profilé de support précité (16) étant équipées de tourillons (22) qui sont immobilisés dans des mâchoires (23) elles-mêmes supportées par des blocs amortisseurs (25).

8. Dispositif selon la revendication 7, caractérisé en ce qu'entre les deux plaques précitées (19) est disposé au moins un petit axe de centrage (18) qui pénètre dans une découpe (17) ménagée dans le bloc de forme allongée (14) en matière élastique lorsque celui-ci est glissé entre les deux plaques précitées (19).

9. Dispositif selon l'une des revendications 1 - 8, caractérisé en ce que des inserts de raclage (31) sont solidarisés au bloc de forme allongée (14), en matière élastique.

10. Dispositif selon la revendication 9, caractérisé en ce que les inserts de raclage précités (31) présentent sensiblement la forme de trapèzes dont la grande base constitue le bord de la lame de raclage.

11. Dispositif selon la revendication 9, caractérisé en ce que les inserts de raclage précités (31) présentent la forme de trapèzes, prolongés par des rectangles du côté qui, en considérant leur position d'utilisation, est dirigé vers le brin de retour de la bande de raclage.

12. Dispositif selon l'une des revendications 1 - 11, caractérisé en ce que le profilé de support précité (16) est soutenu par ses extrémités dans des blocs amortisseurs.

13. Dispositif selon la revendication 12, caractérisé en ce que les blocs amortisseurs précités sont réglables dans la direction dans laquelle une pression peut être exercée sur le brin de retour précité (1').

14. Dispositif selon l'une des revendications 12 et 13, caractérisé en ce que les blocs amortisseurs précités comportent un bloc de matière déformable (25) à laquelle est solidarisée au moins une plaque (24) sur laquelle est fixé un moyen de fixation du profilé de support métallique précité.

## Claims

1. A scraper device for the return run (1') of a conveyor belt, comprising a scraper blade in the form of an elongate block (14), of resilient material, against which there rests a support profile (16) which exerts pressure in the direction of the return run (1'), characterised in that the elongate block (14) has a central zone by means of which it is in contact with the support profile (16) and, on each side of this central zone, a zone in which the edge of the elongate block (14) deviates progressively from the support profile (16).

2. A device according to claim 1, characterised in that the elongate block (14) has one substantially convex side which is in contact with the above-mentioned support profile (16) in its central zone.

3. A device according to either one of claims 1 - 2, characterised in that at least one stiffener (20) is embedded in the mass constituting the elongate block (14) of resilient material.

4. A device according to claim 3, characterised in that the above-mentioned stiffener element (20) consists of steel, the steel being resilient.

5. A device according to claim 3, characterised in that the above-mentioned stiffener element (20) consists of glass fibres.

6. A device according to claim 3, characterised in that the above-mentioned stiffener element (20) consists of carbon fibres.

7. A device according to any one of claims 1 - 6, characterised in that the above-mentioned support profile (16) supports two plates (19) between which the elongate block (14) of resilient material may be positioned, the ends of the above-mentioned support profile (16) being provided with journals (22) which are immobilised in jaws (23) themselves supported by damping blocks (25).

8. A device according to claim 7, characterised in that between the two above-mentioned plates (19) there is arranged at least one small centring shaft (18) which engages in a slot (17) formed in the elongate block (14) of resilient material when the latter has been slipped between the two above-mentioned plates (19).

9. A device according to any one of claims 1 - 8, characterised in that scraper inserts (31) are firmly connected with the elongate block (14) of resilient material.

10. A device according to claim 9, characterised in that the above-mentioned scraper inserts (31) are each substantially in the form of a trapezium, of which the large base constitutes the edge of the scraper blade.

11. A device according to claim 9, characterised in that the above-mentioned scraper inserts (31) are each in the form of a trapezium, extended by rectangles on the side which, when viewed in their position of use, is oriented towards the return run of the scraper belt.

12. A device according to any one of claims 1 - 11, characterised in that the above-mentioned support profile (16) is supported by its ends in damping blocks.

13. A device according to claim 12, characterised in that the above-mentioned damping blocks are adjustable in the direction in which pressure may be exerted on the above-mentioned return run (1').

14. A device according to either one of claims 12 and 13, characterised in that the above-mentioned damping blocks comprise a block of deformable material (25) to which is firmly connected at least one plate (24) on which is fixed a holding means for the above-mentioned metal support profile.

## Patentansprüche

1. Abstreifvorrichtung für den Rücklaufbereich (1') eines Förderbandes, welche ein Abstreifblatt in langgestreckter Form (14) aus elastischem Material aufweist, gegen welches sich ein Stützprofil (16) abstützt, das in Richtung des Rücklaufbereiches (1') einen Druck ausübt, **dadurch gekennzeichnet**, daß der Block (14) in langgestreckter Form einen Mittelbereich aufweist, über welchen er mit dem Stützprofil (16) in Berührung steht, sowie beiderseits dieses Mittelbereichs einen Bereich, in welchem sich die Kante des langgestreckten Blocks (14) sich zunehmend von dem Stützprofil (16) entfernt.

2. Vorrichtung nach Anspruch 1, dadurch gekennzeichnet, daß der Block (14) in langgestreckter Form eine im wesentlichen konvex ausgebildete Seite aufweist, die mit dem genannten Stützprofil (16) in ihrem Mittelbereich in Berührung steht.

3. Vorrichtung nach einem der Ansprüche 1 bis 2, dadurch gekennzeichnet, daß mindestens ein Versteifungselement (20) in die Masse eingebettet ist, aus welcher der langgestreckte Block (14) aus elastischem Werkstoff besteht.

4. Vorrichtung nach Anspruch 3, dadurch gekennzeichnet, daß das vorgenannte Versteifungselement (20) aus Stahl, beispielsweise Federstahl, besteht.

5. Vorrichtung nach Anspruch 3, dadurch gekennzeichnet, daß das vorgenannte Versteifungselement (20) aus Glasfasern besteht.

6. Vorrichtung nach Anspruch 3, dadurch gekennzeichnet, daß das vorgenannte Versteifungselement (20) aus Kohlenstoffasern besteht.

7. Vorrichtung nach einem der Ansprüche 1 bis 6, dadurch gekennzeichnet, daß das vorgenannte Stützprofil (16) zwei Platten (19) trägt, zwischen denen der langgestreckte Block (14) aus elastischem Material positionierbar ist, wobei die Enden des genannten Stützprofils (16) mit Drehzapfen (22) versehen sind, welche in Klemmbacken (23) festgestellt werden, die ihrerseits in Dämpferblöcken (25) gelagert sind.

8. Vorrichtung nach Anspruch 7, dadurch gekennzeichnet, daß zwischen den beiden genannten Platten (19) mindestens eine kleine Zentrierachse (18) angeordnet ist, welche in eine im langgestreckten Block (14) aus elastischem Werkstoff ausgebildete Ausstanzung (17) eingesetzt ist, wenn eine Gleitbewegung des Blattes zwischen den beiden genannten Platten (19) herbeigeführt wird.

9. Vorrichtung nach einem der Ansprüche 1 bis 8, dadurch gekennzeichnet, daß die Abstreifeinsätze (31) fest mit dem langgestreckten Block (14) aus elastischem Werkstoff verbunden sind.

10. Vorrichtung nach Anspruch 9, dadurch gekennzeichnet, daß die vorgenannten Abstreifeinsätze (31) jeweils im wesentlichen die Form eines Trapezes aufweisen, dessen große Basis die Kante des Abstreifblattes bildet.

11. Vorrichtung nach Anspruch 9, dadurch gekennzeichnet, daß die genannten Abstreifeinsätze (31) jeweils trapezförmig ausgebildet sind und sich die Trapeze in Rechtecken auf der Seite fortsetzen, welche unter Berücksichtigung ihrer Betriebsstellung zum Rücklaufbereich des Abstreifbandes gerichtet ist.

12. Vorrichtung nach einem der Ansprüche 1 bis 11, dadurch gekennzeichnet, daß das vorgenannte Stützprofil (16) an seinen Enden in Dämpferblöcken abgestützt ist.

13. Vorrichtung nach Anspruch 12, dadurch gekennzeichnet, daß die genannten Dämpferblöcke in der Richtung, in der auf den genannten Rücklaufbereich (1') ein Druck ausgeübt werden kann, einstellbar sind.

14. Vorrichtung nach einem der Ansprüche 12 und 13, dadurch gekennzeichnet, daß die vorgenannten Dämpferblöcke einen Block aus verformbarem Werkstoff (25) aufweisen, mit welchem mindestens eine Platte (24) fest verbunden ist, auf welcher eine Befestigungseinrichtung für das genannte metallene Stützprofil befestigt ist.
